# EUROPEAN PATENT APPLICATION

(11) **EP 2 605 554 A1**
(43) Date of publication of application: **19.06.2013**
(21) Application number: 12006186.6
(22) Date of filing: 31.08.2012
(51) Int. Cl.: H04W 8/18, H04W 88/06, H04B 1/40, H04B 1/00, H04W 52/02

(54) **Concurrent use of single TX/RX synthesizer pair in multiple SIM devices**

(30) Priority: 12.12.2011 US 201161569621 P; 17.01.2012 US 201261587521 P; 06.02.2012 US 201261595546 P; 25.05.2012 US 201213481306
(71) Applicant: Broadcom Corporation, Irvine, CA 92617 (US)
(72) Inventor: Su, Jin-Sheng, San Diego, CA 92130 (US); Tasev, Zarko, San Diego, CA 92128 (US); Tasiran, Selim, San Diego, CA 92127 (US); Mehio, Rami, San Diego, CA 92128 (US)
(74) Representative: Jehle, Volker Armin

(57) **Abstract**

A technique for tuning the receiver (RX) synthesizer independently from the transmitter (TX) synthesizer helps a mobile communication device with multiple SIMs to concurrently monitor the paging channel of a first network associated with one SIM while transmitting on a second network associated with a second SIM. By independently tuning the RX and the TX synthesizers, each SIM card can maintain synchronization with the network without disruption of service in either network. As a result, the mobile communication device exhibits an increased ability to maintain communication sessions for two different networks, without the need for a second set of TX/RX synthesizer hardware.

## Description

### 1. Priority Claim

This application claims the benefit of priority to the following U.S. provisional patent applications:
U.S. Patent Application Number 61/569,621, filed 12-December-2011, under attorney docket number 14528.00045;
U.S. Patent Application Number 61/587,521, filed 17-January-2012, under attorney docket number 14528.00425; and
U.S. Patent Application Number 61/595,546, filed 6-February-2012, under attorney docket number 14528.00460.

### 2. Technical Field

This disclosure relates to communication devices with multiple Subscriber Identity Modules (SIMs). The disclosure also relates to, in communication devices with multiple SIMs, concurrent use of transmit (TX) and receive (RX) synthesizers for a communications network associated with a first SIM and for a communications network associated with a second SIM.

### 3. Background

Rapid advances in electronics and communication technologies, driven by immense customer demand, have resulted in the widespread adoption of mobile communication devices. The extent of the proliferation of such devices is readily apparent in view of some estimates that put the number of wireless subscriber connections in use around the world at nearly 80% of the world's population. Furthermore, other estimates indicate that (as just three examples) the United States, Italy, and the UK have more mobile phones in use in each country than there are people living in those countries.

Relatively recently, cellular phone manufactures have introduced phone designs that include multiple SIM cards. Each SIM card facilitates a separate connection to the same network or different networks. As a result, the SIMs provide the owner of the phone with, for example, two different phone numbers handled by the same phone hardware. Accordingly, the multiple SIM approach alleviates to some degree the need to carry different physical phones, and improvements in multiple SIM communication devices will continue to make such devices attractive options for the consumer.

### BRIEF SUMMARY OF THE INVENTION

According to an aspect, a method comprises:
tuning a transmit time base to a transmit frequency assigned to a first SIM network connection; and
tuning a receive time base to a receive frequency assigned to a second SIM network connection.

Advantageously, the second SIM network connection comprises a paging channel network connection.

Advantageously, tuning the transmit time base comprises independently tuning the receive time base when a paging indicator is expected on the second SIM network connection

Advantageously, independently tuning comprises independently tuning the receive time base when a paging indicator is expected on the second SIM network connection and when the first SIM network connection is active.

Advantageously, the first SIM network connection comprises an active traffic channel network connection.

Advantageously, tuning to the receive frequency comprises:
tuning the receive time base to the receive frequency assigned to the second SIM network connection, instead of turning the receive time base to meet transmit and
receive frequency spacing requirements for the first SIM network connection.

Advantageously, the method further comprises:
determining when the paging indicator is expected; and
when the paging indicator is not expected, tuning the transmit time base in a fixed relation to the receive time base to meet transmit and receive frequency spacing requirements for the first SIM network connection.

According to an aspect, a system comprises:
a radio frequency communication interface comprising a transmit time base and a receive time base; and
system logic in communication with the radio frequency communication interface, the system logic configured to:
   determine frequency spacing requirements for a first SIM network connection, including a transmit frequency and receive frequency pair for transmitting and receiving on the first SIM network connection;
   tune the transmit time base to the transmit frequency of the transmit frequency and receive frequency pair; and
   instead of tuning the receive time base to the receive frequency of the transmit frequency and receive frequency pair, tune the receive time base to a receive frequency for a second SIM network connection that is different than the receive frequency of the transmit frequency and receive frequency pair.

Advantageously, the second SIM network connection comprises a paging channel network connection.

Advantageously, the system logic is configured to tune the receive time base to a receive frequency for a second SIM network connection that is different than the receive frequency of the transmit frequency and receive frequency pair when a paging indicator is expected on the second SIM network connection.

Advantageously, the system logic is configured to tune the receive time base to a receive frequency for a second SIM network connection that is different than the receive frequency of the transmit frequency and receive frequency pair when a paging indicator is expected on the second SIM network connection and when the first SIM network connection is active.

Advantageously, the first SIM network connection comprises an active traffic channel network connection.

Advantageously, the receive time base is a voltage controlled oscillator.

Advantageously, the system logic is further configured to:
determine when the paging indicator is expected; and
when the paging indicator is not expected, tune the transmit time base to the receive frequency of the transmit frequency and receive frequency pair.

According to an aspect, a radio frequency communication interface comprises:
a transmit frequency synthesizer;
a receive frequency synthesizer; and
a synthesizer interface in communication with the transmit frequency synthesizer and the receive frequency synthesizer, and in communication with:
a processor and a memory comprising:
   frequency control logic that, when executed by the processor:
      determines frequency spacing requirements for SIM network connections, including a transmit frequency and receive frequency pair for transmitting and receiving on a first SIM network connection;
      determines when a second SIM network connection paging event is scheduled on a second SIM network connection;
      determines that the first SIM network connection would be active during the second SIM network connection paging event; and in response:
         tune the receive frequency synthesizer to a receive frequency for the second SIM network connection that is different than the receive frequency of the transmit frequency and receive frequency pair.

Advantageously, frequency control logic further causes the processor to:
maintain the transmit frequency synthesizer at the transmit frequency of the transmit frequency and receive frequency pair.

Advantageously, the second SIM network connection comprises a paging channel network connection.

Advantageously, the first SIM network connection comprises an active traffic channel network connection.

Advantageously, the frequency control logic, when executed by the processor, is further configured to:
when the second SIM network connection paging event is not scheduled, tune the receive frequency synthesizer to the receive frequency of the transmit frequency and receive frequency pair.

Advantageously, the transmit frequency of the transmit frequency and receive frequency pair and the receive frequency of the transmit frequency and receive frequency pair are separated by a fixed frequency offset.

### BRIEF DESCRIPTION OF THE DRAWINGS

The innovation may be better understood with reference to the following drawings and description. In the figures, like reference numerals designate corresponding parts throughout the different views.

Figure 1 shows an example of user equipment with multiple SIMs.

Figure 2 is an example of a block diagram of the communications interface and system logic of user equipment with multiple SIMs.

Figure 3 shows various examples of TX/RX frequency pairs when employing a fixed offset between a TX frequency and its corresponding RX frequency.

Figure 4 shows one example of the various frequency offsets when concurrently using a single TX/RX synthesizer pair for SIM1 and SIM2.

Figure 5 shows an example of frequency control logic that a user equipment may implement, in hardware, software, or both.

### DETAILED DESCRIPTION

The discussion below makes reference to user equipment. User equipment may take many different forms and have many different functions. As one example, user equipment may be a cellular phone capable of making and receiving wireless phone calls. The user equipment may also be a smartphone that, in addition to making and receiving phone calls, runs general purpose applications. User equipment may be virtually any device that wirelessly connects to a network, including as additional examples a driver assistance module in a vehicle, an emergency transponder, a pager, a satellite television receiver, a networked stereo receiver, a computer system, music player, or virtually any other device. The discussion below addresses how to configure a single TX/RX synthesizer pair in user equipment that includes multiple (e.g., two) SIMs.

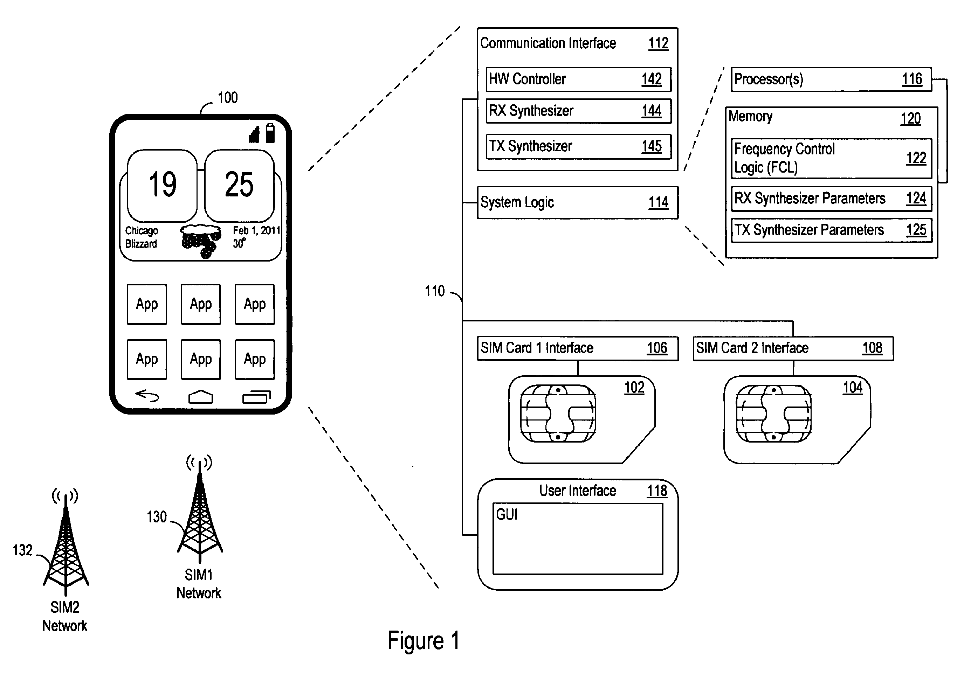

Figure 1 shows an example of user equipment 100 with multiple SIMs, in this example the SIM1 102 and the SIM2 104. An electrical and physical interface 106 connects SIM1 102 to the rest of the user equipment hardware, for example, to the system bus 110. Similarly, the electrical and physical interface 108 connects the SIM2 to the system bus 110.

The user equipment 100 includes a communication interface 112, system logic 114, and a user interface 118. The system logic 114 may include any combination of hardware, software, firmware, or other logic. The system logic 114 may be implemented, for example, in a system on a chip (SoC), application specific integrated circuit (ASIC), or other circuitry. The system logic 114 is part of the implementation of any desired functionality in the user equipment. In that regard, the system logic 114 may include logic that facilitates, as examples, running applications, accepting user inputs, saving and retrieving application data, establishing, maintaining, and terminating cellular phone calls, wireless network connections, Bluetooth connections, or other connections, and displaying relevant information on the user interface 118. The user interface 118 may include a graphical user interface, touch sensitive display, voice or facial recognition inputs, buttons, switches, and other user interface elements.

The communication interface 112 may include one or more transceivers. The transceivers may be wireless transceivers that include modulation / demodulation circuitry, coders / decoders, waveform shapers, amplifiers, analog to digital and digital to analog converters and/or other logic for transmitting and receiving through one or more antennas, or through a physical (e.g., wireline) medium. As one implementation example, the communication interface 112 and system logic 114 may include a BCM2091 EDGE/HSPA Multi-Mode, Multi-Band Cellular Transceiver and a BCM59056 advanced power management unit (PMU), controlled by a BCM28150 HSPA+ system-on-a-chip (SoC) baseband smartphone processer. These integrated circuits, as well as other hardware and software implementation options for the user equipment 100, are available from Broadcom Corporation of Irvine California.

The transmitted and received signals may adhere to any of a diverse array of formats, protocols, modulations, frequency channels, bit rates, and encodings that presently or in the future support communications such as paging notifications, packet switched connections (e.g., for data sessions), and circuit switched connections (e.g., for voice sessions) associated with one or more SIMs. As one specific example, the communication interface 112 may support transmission and reception under the Universal Mobile Telecommunications System (UMTS). The techniques described below, however, are applicable to other communications technologies that include paging whether arising from the 3rd Generation Partnership Project (3GPP), GSM (R) Association, Long Term Evolution (LTE) (TM) efforts, or other partnerships or standards bodies.

Maintaining Communications with the Network

The communications interface 112 can establish network connections to SIM1 network 130. The SIM1 network 130 may, for example, generate and manage a cell for a particular service provider. The SIM1 102 may discover, register with, and connect to the network 130 for data or voice connections, as examples. Similarly, the communications interface 112 can establish network connections to the SIM2 network 132. The SIM2 network 132 may, for example, generate and manage a cell for the same or a different service provider than the SIM1 network 130. Like SIM1 102, the SIM2 104 may discover, register with, and connect to the SIM2 network 132 for data or voice connections. When a network connection is established, the network 130 or 132 may assign certain channels for the user equipment 100 to communicate with the network 130 or 132. As examples, the channels may be traffic channels for actively transmitting or receiving data between the network 130 or 132 and the user equipment 100, or the channels may be control channels for synchronizing with or receiving paging notifications from the network 130 or 132.

The user equipment 100 can maintain a network connection that is either in active mode or in idle mode. When the network connection is in active mode, the network 130 or 132 may have assigned traffic channels to the user equipment 100, which may then actively transmit or receive data using the assigned traffic channels. When the network connection is in idle mode, the user equipment 100 can be in a reduced power "sleep" mode, "waking up" periodically to listen for synchronization or paging information from the network 130 or 132.

While in active mode, the network 130 or 132 maintains the established network connection while the user equipment 100 actively transmits data or receives data on the assigned channels. In some instances, if the user equipment 100 does not actively transmit data to the network 130 or 132 on the assigned channel, the network 130 or 132 may end the established network connection with user equipment 100 and reallocate the channel to another user equipment. Accordingly, when, for example, the user equipment 100 enters areas where signal coverage is not sufficient to perform its communications, the network 130 or 132 may end the connection to the user equipment 100 and provide a connection to a different device.

While in idle mode, the network 130 or 132 may maintain the established network connection with the user equipment 100 by having the user equipment 100 periodically listen for synchronization or paging information from the network 130 or 132. If the user equipment 100 does not periodically wake up to listen for the synchronization or paging information from the network 130 or 132, the user equipment 100 may lose synchronization with the network 130 or 132. As a result, the user equipment 100 may not receive a paging indicator from the network 130 or 132 and may miss a call, message, or data that the network 130 or 132 has designated for the user equipment 100 or the user equipment 100 may lose service.

Configuring the User Equipment

Once the user equipment 100 has established a network connection, the user equipment 100 may configure the communication interface 112 to operate the transceiver on a channel assigned by the network. The channel assigned by the network may be a frequency pair including a transmit (TX) frequency and a receive (RX) frequency. The frequency pair may depend on the communication standards employed by the SIM network 130 or 132, and the frequency pair may relate to the certain channel that is assigned by the network 130 or 132. For the particular frequency pair, the TX frequency may be spaced from the RX frequency by a fixed frequency offset. For example, SIM1 network 130 may assign to the user equipment 100 a certain channel for communicating with the SIM1 network 130. The certain channel may be a particular frequency pair specifying a TX frequency and a corresponding RX frequency. The TX frequency is used by the user equipment 100 for transmitting data from the user equipment 100 to the SIM1 network 130. The RX frequency is used by the user equipment 100 for receiving data at the user equipment 100 from the SIM1 network 130.

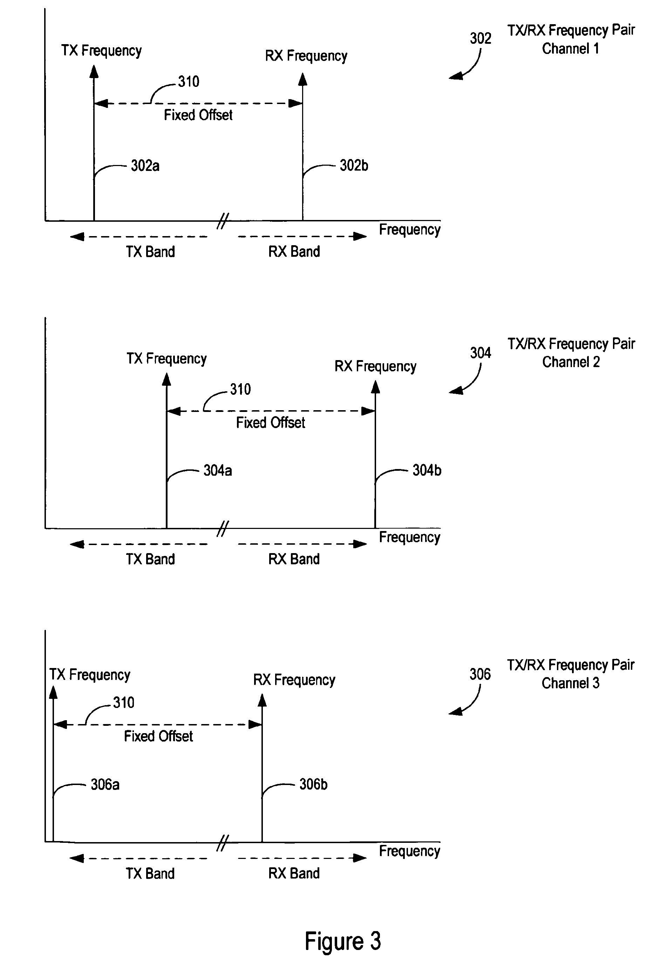

Figure 3 shows examples of channels that correspond to the frequency pairs 302, 304, and 306 where frequency is plotted on the x-axis. SIM1 102 may initially be assigned to Channel 1, for example. Figure 3 shows that Channel 1 corresponds to the TX/RX frequency pair 302, which includes TX frequency 302a and RX frequency 302b. TX frequency 302a is offset from RX frequency 302b by a fixed offset 310. In one implementation that uses the GSM standard, for example, frequency pair 302 may correspond to an assigned GSM channel having TX frequency 302a of 900.0 MHz and RX frequency 302b of 945.0 MHz. In such a case, the fixed offset 310 is 45 MHz.

The user equipment 100 may also be assigned to a different channel for the SIM2 104, for example, and therefore a different frequency pair, as shown by Channel 2 in Figure 3 as TX/RX frequency pair 304. TX/RX frequency pair 304 includes the TX frequency 304a and RX frequency 304b. Even though TX frequency 304a may differ from TX frequency 302a and RX frequency 304b may differ from RX frequency 302b, the frequency offset 310 remains the same. In one implementation that uses the GSM standard, for example, frequency pair 302 may correspond to an assigned GSM channel having TX frequency 304a of 915.0 MHz and RX frequency 304b of 960.0 MHz. In such a case, the fixed offset 310 is still 45 MHz.

Similarly, at any point in time, either SIM1 102 or SIM2 104 may move to a different channel under direction of the network. Figure 3 shows another example in which the user equipment 100 is assigned to Channel 3 and therefore a different frequency pair, as shown by TX/RX frequency pair 306. TX/RX frequency pair 306 includes the TX frequency 306a and RX frequency 306b. Even though TX frequency 306a may differ from TX frequency 304a and RX frequency 306b may differ from RX frequency 304b, the frequency offset 310 remains the same. In one implementation that uses the GSM standard, for example, frequency pair 306 may correspond to an assigned GSM channel having TX frequency 306a of 890.0 MHz and RX frequency 306b of 935.0 MHz. In such a case, the fixed offset 310 is still 45 MHz. In the above examples, the assigned channels, TX/RX frequency pairs, and resulting fixed offset may differ from these few examples and may depend on the communication standard employed by the particular communications network 130 or 132.

Configuring the Transceiver(s) in the User Equipment

In order for the user equipment 100 to communicate on a network, the user equipment 100 may configure the communications interface 112 to use the frequency pair associated with the channel assigned to the user equipment 100 by the network 130 or 132. In one implementation, the user equipment 100 may have one transceiver for each SIM interface 106, 108. In such an implementation, each transceiver may be independently programmed to the frequency pair associated with the channel assigned to each SIM interface 106, 108.

However, in another implementation, the user equipment 100 may have a single transceiver that is shared by each SIM interface 106, 108. In such an implementation, the transceiver can be reprogrammed to switch between the frequency pair associated with the channel assigned to the SIM1 interface 106 for communicating with the SIM1 network 130 and the frequency pair associated with the channel assigned to the SIM2 interface 108 for communicating with the SIM2 network 132.

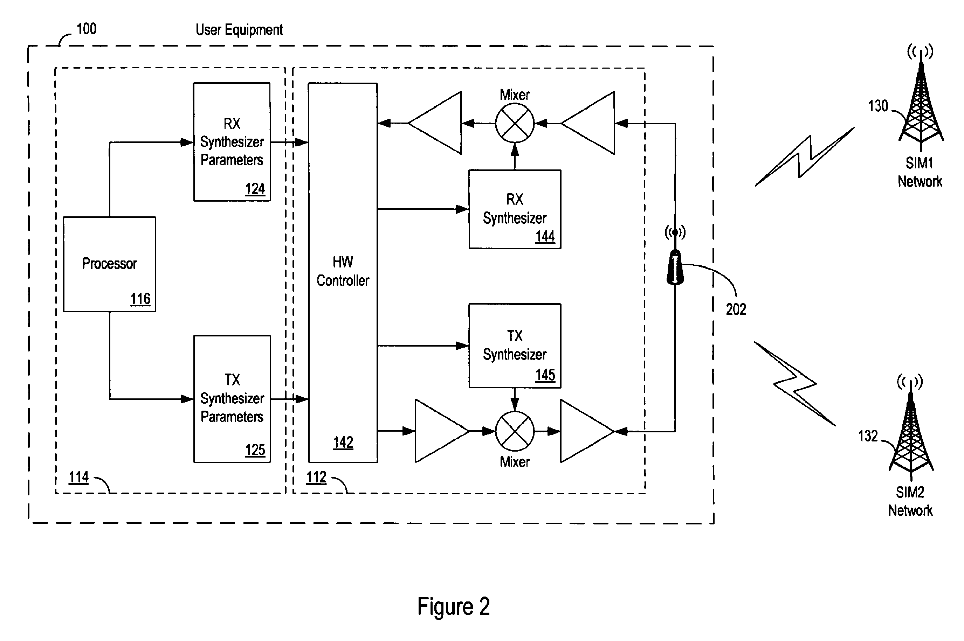

Figure 2 shows an example implementation of the communications interface 112. In the example of Figure 2, the system logic 114 controls the communication interface 112. The communication interface 112 may employ, as part of a transceiver, an RX synthesizer 144 and a TX synthesizer 145. The processor 116 may compute RX synthesizer parameters 124 and TX synthesizer parameters 125 using the frequency control logic 122. The hardware controller 142 uses the RX synthesizer parameters 124 and the TX synthesizer parameters 125 to tune the TX synthesizer 145 and the RX synthesizer 144 to the desired frequencies. For example, the hardware controller 142 may receive from the processor 116, in the form of control bits, a specific frequency to which the synthesizer should be tuned. The control bits may be provided to a modulation input or to a fractional input of a sigma-delta modulator. In one implementation, the control bits provided to the modulation input may be 14 bits and the control bits provided to the fractional input may be 27 bits. In other implementations, the synthesizers may be programed using control bits with other lengths or using other methods for programming the synthesizer to a desired frequency.

Each synthesizer may be any type of tunable time base, such as a voltage controlled oscillator operating as part of a phase locked loop. The TX synthesizer 145 is used, for example, in combination with a mixer to modulate a signal for transmitting via antenna 202 to network 130 or 132. The RX synthesizer 144 is used, for example, in combination with a mixer to demodulate a signal received via antenna 202 from the network 130 or 132. As described above, the user equipment 100 may have multiple transceivers with multiple TX/RX synthesizer pairs. The implementation shown in Figure 2, however, depicts a single transceiver having a single TX/RX synthesizer pair. As such, transmissions to/from the SIM1 network 130 and transmissions to/from the SIM2 network 132 may share a single TX/RX synthesizer pair. The sharing may be a time divisional sharing, coordinated by the system logic 114, so that each SIM has the RF interface at specified times to perform transmit and receive operations.

Sharing Radio Frequency Recourses with Multiple SIMs

In one implementation, the system logic 114 includes one or more processors 116 and a memory 120. The memory 120 stores, for example, frequency control logic 122 that the processor 116 executes. The memory 120 may also store RX synthesizer parameters 124 and TX synthesizer parameters 125. As will be described in more detail below, the frequency control logic 122 facilitates the independent control of the single TX/RX synthesizer pair for concurrent use by a SIM1 network 130 and a SIM2 network 132.

In some implementations of the user equipment 100, the SIMs share radio frequency resources, including the transmit / receive paths and synthesizers. As a result, both SIMs cannot receive at the same time or transmit at the same time. Instead, the user equipment 100 allows the SIMs to share the radio frequency resources, for example in a time division manner or by providing the transmitter to one SIM and providing the receiver to second SIM.

Sharing radio frequency resources may create unique challenges for maintaining concurrent network connections for both SIMs. For example, if the network connection associated with SIM1 is in active mode, the communications interface 112 may configure the radio frequency resources, including the TX/RX synthesizer pair, to use the TX frequency and RX frequency pair corresponding to the channel assigned by SIM1 network 130. This may prevent SIM2 from using the radio frequency resources, because if the communications interface 112 configures the radio frequency resource to use the TX frequency and RX frequency pair corresponding to the channel assigned by SIM2 network 132, SIM1 will no longer be able to transmit information over the established network connection with SIM1 network 130, and the network connection with SIM1 network 130 may be lost.

Also relevant is the situation in which the SIM1 is in active mode and SIM2 is in idle mode. As described above, when in active mode, SIM1 may be actively transmitting while SIM2, when in idle mode, may need to periodically listen on the paging channel. If SIM1 fails to actively transmit, the network connection with SIM1 network 130 may be disrupted. If SIM2 fails to periodically listen on the paging channel, the SIM2 may lose synchronization with the network and may miss paging indications. As a result, user equipment 100 may miss a call, message, or data that the SIM2 network 132 has designated for the user equipment 100.. In order to prevent disruption on the SIM1 network 130 or missed calls on the SIM2 network 132 (or to achieve other receive / transmit goals for SIM1 and SIM2), the user equipment 100 may share the radio frequency resources by configuring the synthesizers independently instead of as a pair. In this manner, the TX frequency to which the TX synthesizer 145 is tuned may no longer have a fixed offset from the RX frequency to which the RX synthesizer 144 is tuned.

In user equipment 100 with multiple SIMs, in this example SIM1 102 and the SIM2 104, the user equipment 100 may establish network connections with SIM1 network 130 or SIM2 network 132 or both. The user equipment 100 may maintain the network connection with SIM1 network 130 while concurrently maintaining the network connection with SIM2 network 132. In order to concurrently maintain the SIM1 network connection and the SIM2 network connection, the communications interface 112 may intelligently share the single transceiver TX/RX synthesizer pair by employing frequency control logic 122 that independently programs the synthesizers. Instead of programing the TX synthesizer 145 together with the RX synthesizer 144 to a TX frequency and RX frequency pair having a fixed offset, the frequency control logic 122 may program the TX synthesizer 145 to a TX frequency and independently program the RX synthesizer 144 to an RX frequency that may not be part of a TX/RX frequency pair. As a result, the tuned TX frequency may not have a fixed offset with respect to the tuned RX frequency.

In another implementation, the time during which the TX frequency and RX frequency are independently programmed may be controlled to be the time period during which SIM2 may need to concurrently use the transceiver, for example to periodically listen on the paging channel or to receive a paging indicator from the SIM2 network 132. At times when SIM2 not need concurrently use the transceiver-for example when the paging indicator is not expected or at times when SIM2 need not listen on the paging channel-the TX frequency and RX frequency may be programmed as a TX/RX frequency pair having a fixed offset, as may be required by the SIM1 network 130.

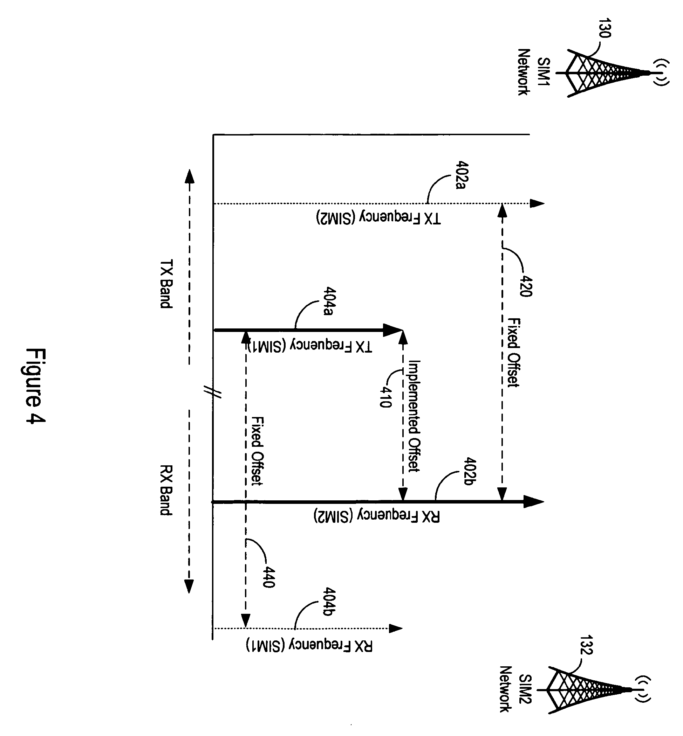

Figure 4 illustrates the independent tuning of the TX/RX synthesizers in the user equipment 100. The user equipment has established a network connection with SIM1 network 130, using SIM1 102. SIM1 network 130 has assigned to the user equipment 100 a channel having a TX/RX frequency pair of TX frequency 404a and RX frequency 404b. The fixed offset 440 represents the frequency spacing requirements for the channel assigned to the SIM1 network connection. The user equipment has also established a network connection with SIM2 network 132, using SIM2 104. SIM2 network 132 has assigned to the user equipment 100 a channel having a TX/RX frequency pair of TX frequency 402a and RX frequency 402b. The fixed offset 420 represents the frequency spacing requirements for the channel assigned to the SIM2 network connection.

When the user equipment 100 does not need to share concurrently the radio frequency resources, however, the communications interface 112 may program the synthesizers together as a TX/RX frequency pair, corresponding to the channel assigned to each SIM. Thus, if SIM1 is using the communications interface 112, the hardware controller 142 may program the synthesizers together as a TX/RX frequency pair to TX frequency 404a and RX frequency 404b having fixed offset 440. If SIM2 is using the communications interface 112, the hardware controller 142 may program the synthesizers together as a TX/RX frequency pair to TX frequency 402a and RX frequency 402b having fixed offset 420.

When the user equipment 100 will concurrently share the radio frequency resources, the communications interface 112 may program the synthesizers independently. Thus, if SIM1 is using the communications interface 112 for transmitting to the SIM1 network 130, the hardware controller 142 may program the TX synthesizer to TX frequency 404a. If SIM2 is expecting to receive a paging indicator or if SIM2 is required to listen to the paging channel, instead of programing the RX synthesizer to RX frequency 404b, the hardware controller 142 may independently program the RX synthesizer to RX frequency 402b. The resulting implemented offset 410 between TX frequency 404a and RX frequency 402b may not have the fixed frequency offset 440 as may be required by SIM1 network 130 or the fixed frequency offset 420 as may be required by SIM2 network 132.

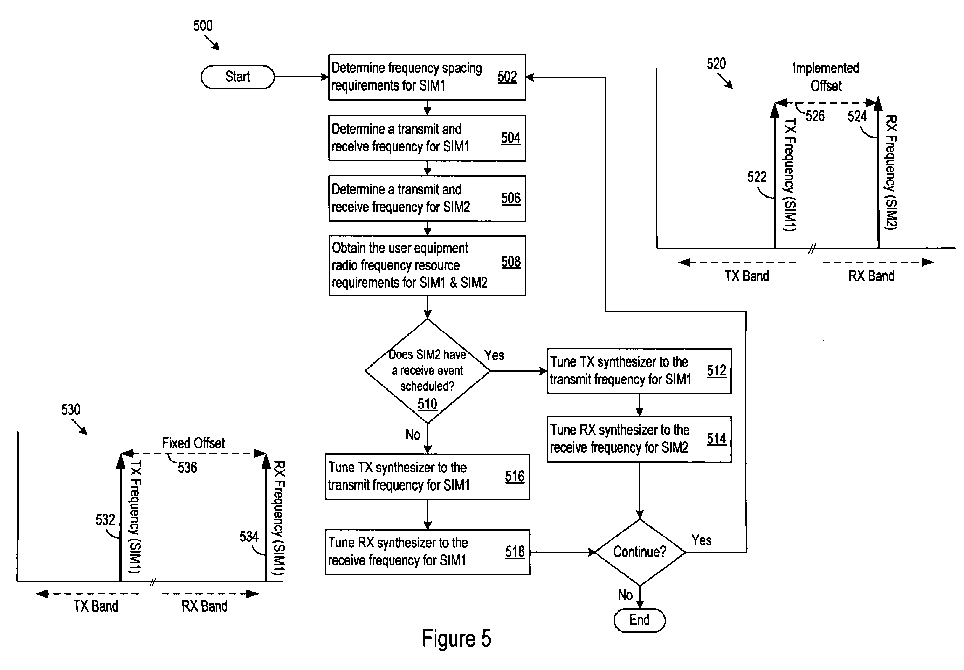

Figure 5 shows one example of the frequency control logic (FCL) 500 that may be used at the user equipment 100. FCL 500 may determine the frequency spacing requirements (502) for SIM1. The frequency spacing requirements may be the TX frequency and RX frequency pair that is associated with the channel assigned by the SIM1 network 130, where the TX frequency and the RX frequency may have a fixed offset. Based on the frequency spacing requirements, the FCL 500 then determines a TX frequency for SIM1 (504) and an RX frequency for SIM1 (506). Next, the FCL 500 may obtain the user equipment radio frequency resource requirements for SIM1 and SIM2 (508). For example, the FCL 500 may determine that SIM1 and SIM2 require the concurrent use of the radio frequency resources because SIM1 is scheduled to actively transmit while SIM2 is scheduled to receive a paging event. If FCL 500 determines at 510 that SIM2 has a receive event (e.g., a paging event) scheduled at the same time as SIM1 is schedule to actively transmit, the FCL 500 tunes the TX synthesizer to the TX frequency for SIM1 (512) and tunes the RX synthesizer to the RX frequency for SIM2 (514). Frequency plot 520 shows the implemented offset 526 that results if TX synthesizer is tuned to the TX frequency for SIM1 522 and RX synthesizer is tuned to the RX frequency for SIM2 524. On the other hand, if FCL 500 determines at 510 that SIM2 does not have a paging event scheduled at the same time as SIM1 is scheduled to actively transmit, the FCL 500 tunes the TX synthesizer to the TX frequency for SIM1 (516) and tunes the RX synthesizer to the RX frequency for SIM1 (518) corresponding to the frequency spacing requirements of SIM1. Frequency plot 530 shows the fixed offset 536 that results if TX synthesizer is tuned to the TX frequency for SIM1 532 and RX synthesizer is tuned to the RX frequency for SIM2 534.

The methods, devices, techniques, and logic described above may be implemented in many different ways in many different combinations of hardware, software or both hardware and software. For example, all or parts of the system may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. All or part of the logic described above may be implemented as logic for execution by a processor, controller, or other processing device and may be stored in a tangible or non-transitory machine-readable or computer-readable medium such as flash memory, random access memory (RAM) or read only memory (ROM), erasable programmable read only memory (EPROM) or other machine-readable medium such as a compact disc read only memory (CDROM), or magnetic or optical disk. Thus, a product, such as a computer program product, may include a storage medium and computer readable instructions stored on the medium, which when executed in an endpoint, computer system, or other device, cause the device to perform operations according to any of the description above.

The processing capability of the system may be distributed among multiple system components, such as among multiple processors and memories, optionally including multiple distributed processing systems. Parameters, databases, and other data structures may be separately stored and managed, may be incorporated into a single memory or database, may be logically and physically organized in many different ways, and may implemented in many ways, including data structures such as linked lists, hash tables, or implicit storage mechanisms. Programs may be parts (e.g., subroutines) of a single program, separate programs, distributed across several memories and processors, or implemented in many different ways, such as in a library, such as a shared library (e.g., a dynamic link library (DLL)). The DLL, for example, may store code that performs any of the system processing described above. While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method comprising:
tuning a transmit time base to a transmit frequency assigned to a first SIM network connection; and
tuning a receive time base to a receive frequency assigned to a second SIM network connection.

2. The method of claim 1, where the second SIM network connection comprises a paging channel network connection.

3. The method of claim 1, where tuning the transmit time base comprises independently tuning the receive time base when a paging indicator is expected on the second SIM network connection.

4. The method of claim 3, where independently tuning comprises independently tuning the receive time base when a paging indicator is expected on the second SIM network connection and when the first SIM network connection is active.

5. The method of claim 1, where the first SIM network connection comprises an active traffic channel network connection.

6. The method of claim 1, where tuning to the receive frequency comprises:
tuning the receive time base to the receive frequency assigned to the second SIM network connection, instead of turning the receive time base to meet transmit and
receive frequency spacing requirements for the first SIM network connection.

7. The method of claim 3, further comprising:
determining when the paging indicator is expected; and
when the paging indicator is not expected, tuning the transmit time base in a fixed relation to the receive time base to meet transmit and receive frequency spacing requirements for the first SIM network connection.

8. A system comprising:
a radio frequency communication interface comprising a transmit time base and a receive time base; and
system logic in communication with the radio frequency communication interface, the system logic configured to:
determine frequency spacing requirements for a first SIM network connection,
including a transmit frequency and receive frequency pair for transmitting and receiving on the first SIM network connection;
tune the transmit time base to the transmit frequency of the transmit frequency and receive frequency pair; and
instead of tuning the receive time base to the receive frequency of the transmit frequency and receive frequency pair, tune the receive time base to a receive frequency for a second SIM network connection that is different than the receive frequency of the transmit frequency and receive frequency pair.

9. The system of claim 8, where the second SIM network connection comprises a paging channel network connection.

10. The system of claim 8, where the system logic is configured to tune the receive time base to a receive frequency for a second SIM network connection that is different than the receive frequency of the transmit frequency and receive frequency pair when a paging indicator is expected on the second SIM network connection.

11. The system of claim 8, where the system logic is configured to tune the receive time base to a receive frequency for a second SIM network connection that is different than the receive frequency of the transmit frequency and receive frequency pair when a paging indicator is expected on the second SIM network connection and when the first SIM network connection is active.

12. The system of claim 8, where the first SIM network connection comprises an active traffic channel network connection.

13. The system of claim 8, where the receive time base is a voltage controlled oscillator.

14. The system of claim 8, where the system logic is further configured to:
determine when the paging indicator is expected; and
when the paging indicator is not expected, tune the transmit time base to the receive frequency of the transmit frequency and receive frequency pair.

15. A radio frequency communication interface comprising:
a transmit frequency synthesizer;
a receive frequency synthesizer; and
a synthesizer interface in communication with the transmit frequency synthesizer and
the receive frequency synthesizer, and in communication with:
a processor and a memory comprising:
frequency control logic that, when executed by the processor:
determines frequency spacing requirements for SIM network connections,
including a transmit frequency and receive frequency pair for transmitting and
receiving on a first SIM network connection;
determines when a second SIM network connection paging event is scheduled on a second SIM network connection;
determines that the first SIM network connection would be active during the second SIM network connection paging event; and in response:
tune the receive frequency synthesizer to a receive frequency for the second SIM network connection that is different than the receive frequency of the transmit frequency and receive frequency pair.
